# EUROPEAN PATENT APPLICATION

(11) **EP 1 463 011 A2**
(43) Date of publication of application: **29.09.2004**
(21) Application number: 03425812.9
(22) Date of filing: 19.12.2003
(51) Int. Cl.: G07F 19/00

(54) **Method for authorising mandates of payment, in particular for payments carried out on the internet by credit cards, and related system**

(30) Priority: 30.12.2002 IT rm20020656
(71) Applicant: Cicione, Luigi, 04023 Formia (LT) (IT); Riccardelli, Marcello, 04023 Formia (LT) (IT)
(72) Inventor: Cicione, Luigi, 04023 Formia (LT) (IT); Ricardelli, Marcello, 04023 Fiormia (LT) (IT)
(74) Representative: Iannone, Carlo Luigi

(57) **Abstract**

The invention concerns a method, and the related system, for authorising mandates of payment through credit instruments, in particular for payments carried out on the Internet by credit cards, wherein a purchaser (1) provided with a credit instrument, issued by an issuing institution (4) and univocally determined by credit instrument identification data, purchases at least one item of goods and/or at least one service in a commercial site (2) through a purchase order univocally determined by an identification number of the purchase order, characterised in that it comprises the following phases:
- giving the purchase order identification number by the commercial site (2) to the purchaser (1);
- giving at least one first portion of the credit instrument identification data by the purchaser (1) to the commercial site (2) through a first communication channel;
- sending, from the commercial site (2) to the issuing institution (3, 4), a request for authorisation of the mandate of payment, comprising the purchase order identification number and said at least one first portion of the credit instrument identification data;
- giving the purchase order identification number and at least one second portion of the credit instrument identification data by the purchaser (1) to the issuing institution (3, 4) through a second communication channel;
- checking, by the issuing institution (3, 4), the validity of the credit instrument corresponding to said at least one first portion of the identification data and to said at least one second portion of the identification data; and
- sending, from the issuing institution (3, 4) to the commercial site (2), a confirmation or refusal of authorisation of the mandate of payment, depending on the outcome of checking.

## Description

The present invention refers to a method for authorising mandates of payment, in particular for payments via Internet by credit cards, the method enabling a very high safety, and being simple, reliable, and inexpensive to be realised.

The invention further refers to the system executing the method.

The method of payment through the so-called credit cards is currently widely used and increasingly diffusing all over the world.

Such method of payment is employed for making purchases particularly on the Internet information network, on which the so-called electronic commerce, or e-Commerce, is rapidly increasing.

The method of payment through credit card, technically defined as mandate of payment, provides that the purchaser, called principal, of goods or services assigns to the vendor, called mandatee, an intermediary, called proxy, which binds itself in place of the purchaser to pay the price for the goods or services provided by the vendor. The intermediary is an institution issuing credit cards which takes responsibility for making payments due to the vendor and for drawing, in a moment that is delayed with respect to the moment of the purchase, the due money from the purchaser. The authorisation of mandate is given by the issuing institution after recognition of credit card data as valid, in particular the card identification number.

Usually, the purchaser, which is the owner of a credit card issued by the issuing institution and provided with the owner's personal data, the identification number and an expiry date, signs a sale document, wherein the details of the made business operation (such as, for instance, type of purchased goods or services, seller's identification data, time and date of the operation) are reported, that he gives to the seller. In particular, the sale document is printed by a device which automatically reads the card, usually through magnetic means.

In case of payment operations carried out on the Internet network, the purchaser restricts himself to communicating to the seller the issuing institution of the credit card and, possibly, the expiry date and the owner's personal data. More specifically, the purchaser, purchasing on an Internet site through credit card, is connected, at the time of the purchase, to a page controlled by a bank server within which, after having inserted all the data of his credit card, the transaction is carried out.

It is known that the methods of payment on Internet through credit cards presents the drawback that the data of the cards may be intercepted and read during transmission on the Internet network, and they may be used afterwards without authorisation of the owner.

Therefore, bank servers controlling the transaction are usually provided with a safety protection, and to this end company exist which offer protection and safety services for the payment by credit cards, aimed to avoid that data of the cards are intercepted and read during transmission on the Internet network. Such solutions comprise cryptographic methods, based upon use of specific keys, alphanumeric coding of transmitted data and corresponding decoding of received data.

This entails a significant increase of complexity of the data transmission and reception procedures, with consequent increases of length of time and costs.

Moreover, in the case where the cryptographic keys are found out, such methodologies lose their effectiveness at all.

Finally, all the above entails also a psychological reluctance of the users in giving the data of their credit cards, without considering the safety offered by the Internet site which is visited, causing a still limited diffusion of the purchases over the Internet.

It is therefore an object of the present invention to grant a very high secrecy and safety in authorising mandates of payment, in particular for payments via Internet by credit cards, in a simple and reliable way.

It is specific subject matter of this invention a method for authorising mandates of payment through credit instruments, wherein a purchaser provided with a credit instrument, issued by an issuing institution and univocally determined by credit instrument identification data, purchases at least one item of goods and/or at least one service in a commercial site through a purchase order univocally determined by an identification number of the purchase order, characterised in that it comprises the following phases:
- giving the purchase order identification number by the commercial site to the purchaser;
- giving at least one first portion of the credit instrument identification data by the purchaser to the commercial site through a first communication channel;
- sending, from the commercial site to the issuing institution, a request for authorisation of the mandate of payment, comprising the purchase order identification number and said at least one first portion of the credit instrument identification data;
- giving the purchase order identification number and at least one second portion of the credit instrument identification data by the purchaser to the issuing institution through a second communication channel;
- checking, by the issuing institution, the validity of the credit instrument corresponding to said at least one first portion of the identification data and to said at least one second portion of the identification data; and
- sending, from the issuing institution to the commercial site, a confirmation or refusal of authorisation of the mandate of payment, depending on the outcome of checking.

Always according to the invention, the phase of giving the purchase order identification number and at least one second portion of the credit instrument identification data, by the purchaser to the issuing institution through a second communication channel, may occur within a time limit, beyond which the authorisation of the mandate of payment is refused.

Still according to the invention, said at least one first portion of the credit instrument identification data may comprise a first portion of an identification number of a credit card, and said at least one second portion of the credit instrument identification data may comprise a second portion of the credit card identification number.

Furthermore according to the invention, both said first portion and said second portion of the credit card identification number may comprise 8 digits.

Always according to the invention, said at least one first portion of the credit instrument identification data and/or said at least one second portion of the credit instrument identification data may comprise an expiry date of the credit instrument.

Still according to the invention, the method may further comprise giving a message of confirmation or refusal of authorisation of the mandate of payment, depending on the outcome of checking, by the issuing institution to the purchaser through a third communication channel. Furthermore according to the invention, said second communication channel may comprise a telephony network.

Always according to the invention, the purchaser may give the purchase order identification number and said at least one second portion of the credit instrument identification data to the issuing institution through said telephony network, by means of a telephone call to a number at which an automatic apparatus answers.

Still according to the invention, said telephony network may be a cellular telephony network and the purchaser may give the purchase order identification number and said at least one second portion of the credit instrument identification data to the issuing institution by means of a SMS message.

Furthermore according to the invention, said second communication channel may comprise the Internet network and the purchaser may give the purchase order identification number and said at least one second portion of the credit instrument identification data to the issuing institution by entering them into a web page or by means of an e-mail message.

Always according to the invention, said third communication channel may comprise a cellular telephony network and the issuing institution may give the message of confirmation or refusal of authorisation of the mandate of payment to the purchaser by means of a SMS message.

Still according to the invention, said third communication channel may comprise the Internet network and the issuing institution may give the message of confirmation or refusal of authorisation of the mandate of payment to the purchaser by displaying it on a web page and possibly as well as, or alternatively, by means of an e-mail message.

Preferably according to the invention, the issuing institution is provided with a processing system which receives from the commercial site the request for authorisation of the mandate of payment, receives from the purchaser through the second communication channel the purchase order identification number and said at least one second portion of the credit instrument identification data, and sends the confirmation or refusal of authorisation of the mandate of payment to the commercial site. Said processing system of the issuing institution may possibly send the message of confirmation or refusal of authorisation of the mandate of payment to the purchaser.

Furthermore according to the invention, said commercial site may be an Internet site and said first communication channel may be the Internet network, the purchase order identification number being given to the purchaser by displaying it on a web page of the Internet site.

Always according to the invention, said commercial site may be a shop.

In such case, still according to the invention, said first communication channel may comprise an electronic terminal into which the purchaser enters said at least one first portion of the credit instrument identification data, or may comprise an electronic terminal for reading the credit instrument.

It is still specific subject matter of this invention a system for authorising for authorising mandates of payment through credit instruments, in particular for payments carried out on the Internet by credit cards, wherein a purchaser provided with a credit instrument, issued by an issuing institution and univocally determined by credit instrument identification data, purchases at least one item of goods and/or at least one service in a commercial site through a purchase order univocally determined by an identification number of the purchase order, the system being characterised in that it comprises means apt to performs the method for authorising mandates of payment through credit instruments just described.

The present invention will be now described, by way of illustration and not by way of limitation, according to its preferred embodiments, by particularly referring to the Figures of the enclosed drawings, in which:
Figure 1 shows a schematic diagram of a request for authorisation of a credit card payment carried out through a preferred embodiment of the method according to the invention; and
Figure 2 shows a schematic diagram of the authorisation of a credit card payment carried out through the method of Figure 1.

In the following of the description same references will be used to indicate alike elements in the Figures.

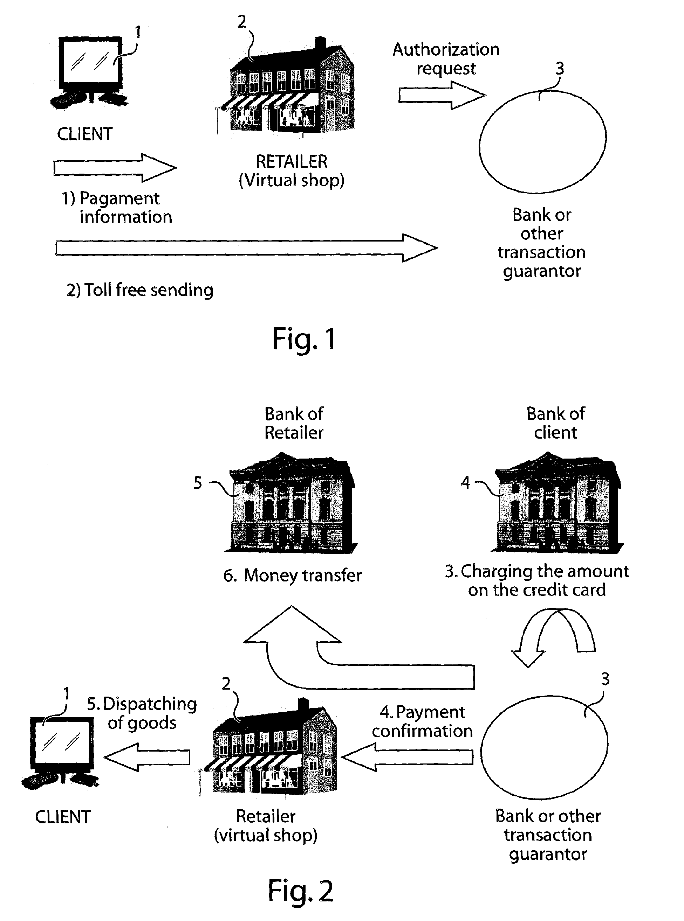

With reference to Figure 1, a purchaser, who wishes to carry out a purchase through the Internet, connects through a PC 1 to a commercial site 2. For purchases through credit card, the commercial site 2 displays an identification number of the purchase order to the purchaser, while the purchaser enters only a first portion of the credit card identification data. In particular, in the case where the credit card is identified by a univocal number comprising 16 digits, the purchaser enters only the first 8 digits of such number.

The system controlling the commercial site 2 associates such received first portion of the credit card identification data (for instance, the first 8 digits of the card identification number) with the identification number of the purchase order of the purchaser and sends a request for authorisation to a system 3 of the institution, such as a bank, which has issued the credit card, giving such first portion of the credit card identification data and the identification number of the purchase order.

The system 3 places the request for payment waiting until the purchaser gives through a channel communicating with the system 3 the missing part of the credit card identification data. In particular, the purchaser sends, preferably within a time limit, a second portion of the identification data, together with the identification number of the purchase order, making a telephone call to a number, preferably a toll free number, at which an automatic apparatus connected to the system 3 answers. Alternatively, the purchaser may transmit such second portion of the identification data and the identification number of the purchase order through a SMS message from a cellular telephone, or by connecting to an Internet page connected to the system 3, or through an e-mail message.

In particular, in the case when the credit card is identified by a univocal number comprising 16 digits, the second portion comprises the last 8 digits thereof.

With reference to Figure 2, the system 3, or a different system of the issuing institution 4 (possibly the same already used for controlling the payments carried out conventionally in shops), executes the usual controls for checking the regularity of the request and recognising the validity of the credit card data and, in the case when the authorisation is given, it transmits the charge data to the issuing institution 4 in order to transfer the due amount to the bank 5 of the commercial site 2. Furthermore, the system 3 sends a payment confirmation message to the system controlling the commercial site 2, so that the commercial site 2 gives the purchased goods or services to the purchaser. In particular, the system 3 may also send to the purchaser a given authorisation confirmation message, through an e-mail message, or a SMS message, or a message displayed on the page connected to the system 3.

Even for the traditional system of payment, in order to avoid the cloning of the credit cards, these could be used with the addition of entering into the POS terminal a further identification code, which is the second portion of the credit card identification data.

Similarly, the method may further be applied to payments by credit cards carried out in commercial sites, by entering the first portion of the credit card identification data into a suitable terminal.

It is evident that, with the method according to the invention, payments by credit cards have a very high safety, fostering the elimination of the psychological block of the Internet users wishing to make purchases.

The preferred embodiments have been above described and some modifications of this invention have been suggested, but it should be understood that those skilled in the art can make other variations and changes, without so departing from the related scope of protection, as defined by the following claims.

## Claims

1. Method for authorising mandates of payment through credit instruments, wherein a purchaser (1) provided with a credit instrument, issued by an issuing institution (4) and univocally determined by credit instrument identification data, purchases at least one item of goods and/or at least one service in a commercial site (2) through a purchase order univocally determined by an identification number of the purchase order, **characterised in that** it comprises the following phases:
- giving the purchase order identification number by the commercial site (2) to the purchaser (1);
- giving at least one first portion of the credit instrument identification data by the purchaser (1) to the commercial site (2) through a first communication channel;
- sending, from the commercial site (2) to the issuing institution (3, 4), a request for authorisation of the mandate of payment, comprising the purchase order identification number and said at least one first portion of the credit instrument identification data;
- giving the purchase order identification number and at least one second portion of the credit instrument identification data by the purchaser (1) to the issuing institution (3, 4) through a second communication channel;
- checking, by the issuing institution (3, 4), the validity of the credit instrument corresponding to said at least one first portion of the identification data and to said at least one second portion of the identification data; and
- sending, from the issuing institution (3, 4) to the commercial site (2), a confirmation or refusal of authorisation of the mandate of payment, depending on the outcome of checking.

2. Method according to claim 1, **characterised in that** the phase of giving the purchase order identification number and at least one second portion of the credit instrument identification data, by the purchaser (1) to the issuing institution (3, 4) through a second communication channel, occurs within a time limit, beyond which the authorisation of the mandate of payment is refused.

3. Method according to claim 1 or 2, **characterised in that** said at least one first portion of the credit instrument identification data comprises a first portion of an identification number of a credit card, and **in that** said at least one second portion of the credit instrument identification data comprises a second portion of the credit card identification number.

4. Method according to claim 3, **characterised in that** both said first portion and said second portion of the credit card identification number comprise 8 digits.

5. Method according to any one of the preceding claims, **characterised in that** said at least one first portion of the credit instrument identification data comprises an expiry date of the credit instrument.

6. Method according to any one of the preceding claims, **characterised in that** said at least one second portion of the credit instrument identification data comprises an expiry date of the credit instrument.

7. Method according to any one of the preceding claims, **characterised in that** it further comprises giving a message of confirmation or refusal of authorisation of the mandate of payment, depending on the outcome of checking, by the issuing institution (3, 4) to the purchaser (1) through a third communication channel.

8. Method according to any one of the preceding claims, **characterised in that** said second communication channel comprises a telephony network.

9. Method according to claim 8, **characterised in that** the purchaser (1) gives the purchase order identification number and said at least one second portion of the credit instrument identification data to the issuing institution (3, 4) through said telephony network, by means of a telephone call to a number at which an automatic apparatus answers.

10. Method according to claim 8, **characterised in that** said telephony network is a cellular telephony network and **in that** the purchaser (1) gives the purchase order identification number and said at least one second portion of the credit instrument identification data to the issuing institution (3, 4) by means of a SMS message.

11. Method according to any one of the claims from 1 to 7, **characterised in that** said second communication channel comprises the Internet network and **in that** the purchaser (1) gives the purchase order identification number and said at least one second portion of the credit instrument identification data to the issuing institution (3, 4) by entering them into a web page.

12. Method according to any one of the claims from 1 to 7,
**characterised in that** said second communication channel comprises the Internet network and **in that** the purchaser (1) gives the purchase order identification number and said at least one second portion of the credit instrument identification data to the issuing institution (3, 4) by means of an e-mail message.

13. Method according to claim 7 or any one of the claims from 8 to 12, when depending on claim 7, **characterised in that** said third communication channel comprises a cellular telephony network and **in that** the issuing institution (3, 4) gives the message of confirmation or refusal of authorisation of the mandate of payment to the purchaser (1) by means of a SMS message.

14. Method according to claim 7 or any one of the claims from 8 to 12, when depending on claim 7, **characterised in that** said third communication channel comprises the Internet network and **in that** the issuing institution (3, 4) gives the message of confirmation or refusal of authorisation of the mandate of payment to the purchaser (1) by displaying it on a web page.

15. Method according to claim 7 or any one of the claims from 8 to 14, when depending on claim 7, **characterised in that** said third communication channel comprises the Internet network and **in that** the issuing institution (3, 4) gives the message of confirmation or refusal of authorisation of the mandate of payment to the purchaser (1) by means of an e-mail message.

16. Method according to any one of the preceding claims, **characterised in that** the issuing institution (4) is provided with a processing system which receives from the commercial site (2) the request for authorisation of the mandate of payment, receives from the purchaser (1) through the second communication channel the purchase order identification number and said at least one second portion of the credit instrument identification data, and sends the confirmation or refusal of authorisation of the mandate of payment to the commercial site (2).

17. Method according to claim 16, when depending on claim 7, **characterised in that** said processing system of the issuing institution (4) sends the message of confirmation or refusal of authorisation of the mandate of payment to the purchaser (1).

18. Method according to any one of the preceding claims, **characterised in that** said commercial site (2) is an Internet site and **in that** said first communication channel is the Internet network, the purchase order identification number being given to the purchaser by displaying it on a web page of the Internet site.

19. Method according to any one of the claims from 1 to 18, **characterised in that** said commercial site (2) is a shop.

20. Method according to claim 19, **characterised in that** said first communication channel comprises an electronic terminal into which the purchaser enters said at least one first portion of the credit instrument identification data.

21. Method according to claim 19, **characterised in that** said first communication channel comprises an electronic terminal for reading the credit instrument.

22. System for authorising mandates of payment through credit instruments, in particular for payments carried out on the Internet by credit cards, wherein a purchaser (1) provided with a credit instrument, issued by an issuing institution (4) and univocally determined by credit instrument identification data, purchases at least one item of goods and/or at least one service in a commercial site (2) through a purchase order univocally determined by an identification number of the purchase order, the system being **characterised in that** it comprises means apt to performs the method for authorising mandates of payment through credit instruments according to any one of the preceding claims.
